(19) Europäisches Patentamt
European Patent Office
Office européen des brevets

(11) Publication number: 0 230 024 B1

(12) **EUROPEAN PATENT SPECIFICATION**

(45) Date of publication of patent specification: 21.11.91 (51) Int. Cl.$^5$: G11B 7/24, G03C 1/72

(21) Application number: 86117789.7

(22) Date of filing: 19.12.86

The file contains technical information submitted after the application was filed and not included in this specification

(54) **Optical recording medium having a stabilized recording layer.**

(30) Priority: 20.12.85 JP 288449/85
20.12.85 JP 288551/85

(43) Date of publication of application:
29.07.87 Bulletin 87/31

(45) Publication of the grant of the patent:
21.11.91 Bulletin 91/47

(84) Designated Contracting States:
DE FR GB

(56) References cited:
EP-A- 0 014 046
DE-B- 1 269 665
DE-B- 1 298 567

PATENT ABSTRACTS OF JAPAN, vol. 9, no. 320 (P-413)[2043], 14th December 1985; & JP-A-60 147 733 (NIPPON DENSHIN DENWA KOSHA) 03-08-1985

THIN SOLID FILMS, vol. 133, November 1985, pages 21-28, Elsevier Sequoia, Lausanne, CH; E. ANDO et al.:"J-aggregation of photochromic spiropyran in Langmuir-Blodgett films"

PATENT ABSTRACTS OF JAPAN, vol. 6, no. 125 (P-127)[1003], 10th July 1982; & JP-A-57 50 340 (TOKYO DENKI KAGAKU KOGYO K.K.) 24-03-1982

(73) Proprietor: MATSUSHITA ELECTRIC INDUSTRIAL CO., LTD.
1006, Oaza Kadoma
Kadoma-shi, Osaka-fu, 571(JP)

(72) Inventor: Miyazaki, Jinsei
8-46, Nagaokagu-cho 1-chome
Hirakata-shi Osaka(JP)
Inventor: Ando, Eiji
15-20, Fujigao 4-chome
Katano-shi Osaka(JP)

(74) Representative: Bühling, Gerhard, Dipl.-Chem. et al
Patentanwaltsbüro Tiedtke-Bühling-Kinne Grupe-Pellmann-Grams-Struif Bavariaring 4
W-8000 München 2(DE)

EP 0 230 024 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### BACKGROUND OF THE INVENTION

Field of the Invention

This invention relates to an optical recording medium for optically reading and writing information by utilizing chemical conversion of photochromic dyes.

Description of the Prior Art

Rewritable optical recording media are known, typical of which is a medium using photochromic dyes. The rewritable recording medium using photochromic dyes generally comprises an optically transparent disk substrate and a coating (recording layer) of a photochromic dye formed on the substrate. For information recording, while the optical recording medium is being rotated for tracking, a laser beam having a wavelength of $\lambda 1$ is applied on one spot of the disk surface. The photochromic dye on the spot undergoes a photochromic reaction in which the colorless dye is changed to a colored one having a visible absorption spectrum at $\lambda 2$. By this, single bit information is recorded on the spot. If a weak laser beam having a wavelength of $\lambda 2$ is applied to the disk surface for reading, the beam is absorbed at the colored portion. The absorption can be detected from a change in intensity of the transmitted beam. Moreover, when an intense laser beam having a wavelength of $\lambda 2$ is applied to the colored portion in the same manner as in writing, the colored dye is changed to a colorless state. Thus, the information can he erased. However, colored isomers of photochromic dyes are generally unstable and naturally fade in the dark. This presents a difficulty in making an optical recording medium which ensures a long life of recorded information.

"Thin Solid Films", Vol. 133, November 1985, p. 21-28, discloses a photochromic spiropyran having two long chains which is used together with octadecane.

DE-B-1 269 665 discloses a mixture of a spiropyran with nickel pivalate for use in recording media.

DE-B-1 298 567 discloses a mixture of a spiropyran with trichloroacetic acid or pyromellitic acid for use in recording media.

### SUMMARY OF THE INVENTION

The object of the invention is to provide an optical recording medium having a recording layer of a photochromic spiropyran in which natural fading of the once colored spiropyran is reduced so that recorded information can be stored over a long term.

The above-mentioned object is achieved by an optical recording medium which comprises an optically transparent substrate and a recording layer formed on said substrate, said recording layer comprising a photochromic spiropyran having an alkyl group containing at least 10 carbon atoms in the molecule, characterized in that said recording layer comprises a mixture of said spiropyran and an amphiphatic compound selected from the group consisting of aliphatic acids having from 14 to 24 carbon atoms and salts thereof.

If desired, the mixture may be dispersed in a resin binder and the dispersion is formed on the substrate. The recording layer is deposited on the optically transparent substrate, for example, by the Langmuir-Blodgett film method, a spin coating method, a resin dispersion method or other known coating techniques. By the presence of the amphiphatic compounds, merocyanines, which are colored isomers of photochromic spiropyrans formed by a photochromic reaction, are stabilized by interaction with the amphiphatic compounds which are polar in nature. Accordingly, the recording life of recorded information can be prolonged.

### BRIEF DESCRIPTION OF THE DRAWING

The sole figure is a schematic view illustrating stabilization of a photochromic spiropyran with an amphiphatic compound.

### DETAILED DESCRIPTION AND EMBODIMENTS OF THE INVENTION

Photochromic spiropyrans used in the practice of the invention should be reversibly converted to photomerocyanines, i.e. counter ions of the spiropyrans, upon irradiation of UV rays. Such spiropyrans may

be represented by the following general formula

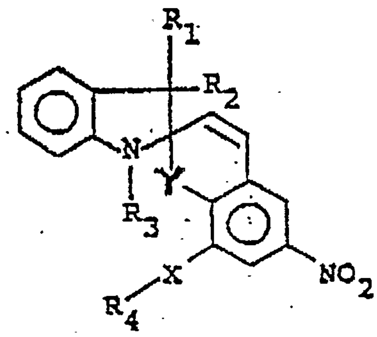

in which $R_1$ and $R_2$ are independently a lower alkyl group, $R_3$ represents an alkyl group having at least 10 carbon atoms, X is a single bond or a group of one of the following formulae, $-C_nH_{2n}OCO-$, $-C_nH_{2n}COO-$, $-C_nH_{2n}NHCO-$, $-C_nH_{2n}CONH-$ or $-C_nH_{2n}O-$ wherein $n \geqq 0$, $R_4$ represents an alkyl group having at least one carbon atom, and Y represents an oxygen or sulfur atom. In the above formula, $R_1$ and $R_2$ are each preferably methyl, ethyl, or propyl. $R_3$ preferably represents an alkyl group having from 14 to 24 carbon atoms, e.g. hexadecyl or octadecyl. X is preferably $-CH_2OCO-$ or -O-.

Examples of typical spiropyrans include 6-nitro-1'-octadecyl-3',3'-dimethylspiro[2H-1-benzothiopyran-2,2'-indoline], 6-nitro-1'-octadecyl-3',3'-dimethylspiro[2H-1-benzopyran-2,2'-indoline], 6-nitro-1'-octadecyl-8-methoxy-3',3'-dimethylspiro[2H-1-benzopyran-2,2'-indoline], and 6-nitro-1'-octadecyl-8-docosanoyloxy-3,3'-dimethylspiro[2H-1-benzopyran-2,2'-indoline]. In view of the photochromic characteristics, 6-nitro-1'-octadecyl-8-methoxy-3',3'-dimethylspiro[2H-1-benzopyran-2,2'-indoline] and 6-nitro-1'-octadecyl-8-docosanoyloxy-3,3'-dimethylspiro[2H-1-benzopyran-2,2'-indoline] are preferred.

Because photomerocyanines are so high in polarity, they can be stabilized by polar groups of amphiphatic compounds as defined in claim 1.

The amphiphatic compounds used herein are intended to mean aliphatic acids having from 14 to 24 carbon atoms and salts of these acids. It will be noted that aliphatic compounds such as aliphatic amines, aliphatic alcohols and esters of aliphatic acids and alcohols may be used for the same purpose but they are inferior in effect than the amphiphatic compounds used in the present invention. Examples of the preferable aliphatic acids include myristic acid, pentadecylic acid, palmitic acid, heptadecylic acid, stearic acid, nonadecylic acid, and behenic acid. In view of the economy, stearic acid is preferred. The salts of the aliphatic acids may be those salts using metals such as Na, K, Mg, Ca, Zn, Ba, Sr, Cd, Fe, or Cu. Of these, aliphatic acids are preferably used in the practice of the invention because a higher stabilizing effect on photomerocyanines is expected.

These amphiphatic compounds are preferably used in an amount of 0.1 to 10 moles per mole of a spiropyran used, which may vary depending on the manner of formation of a recording layer.

The recording layer is formed from a mixture of a spiropyran and an amphiphatic compound by a variety of methods including, for example, a Langmuir-Blodgett film method (hereinafter referred to simply as LB method), a spin coating method and other ordinary coating methods. The ordinary coating methods may be an air doctor coating method, a blade coating method, a rod coating method, a knife coating method and a squeeze coating method. Of these, the LB method is preferred. This is because if the LB method is used to form a recording layer, molecules of a spiropyran and an amphiphatic compound in the layer come close to one another and are oriented as will be described hereinafter. Accordingly a good stabilizing effect is ensured. For the formation of the recording layer by the LB method, a spiropyran and an aliphatic acid having from 14 to 24 carbon atoms or its salt are dissolved in an inert solvent such as chloroform, aromatic hydrocarbons, e.g. benzene, or toluene, tetrahydrofuran, acetonitrile, acetone, or ethanol, in a concentration of, for example, from 0.1 to 3 wt% in total. The solution is dropped over a water surface under certain pH and temperature conditions. The solution on the water is compressed to a surface pressure of, for example, 20 to 40 mN/m (dynes/cm). The resulting film is applied onto a substrate, followed by repeating the above procedure to form a multilayer film on the substrate in a desired thickness.

According to the LB method, spiropyrans should preferably have an alkyl group containing from 14 to 24 carbon atoms.

As stated above, other coating methods may be likewise used to form a recording layer. In order to prevent natural evaporation of amphiphatic compounds during coating operations, it is preferred in these

methods to use carboxylic acids having a relatively low vapor pressure or having from 14 to 24 carbon atoms. In these methods, a resin binder may be further added to a mixture of a photochromic spiropyran and an amphiphatic compound in order to form a recording layer of high mechanical strength. The resin binders may be any known resins suitable for use as a binder. Typical examples of the resins include vinyl chloride resins, polystyrene, vinylidene chloride resins and acrylic resins. These resin binders are used in amounts not impeding the photochromic effect of the spiropyran, i.e. from 10 to 99 wt% of the total composition.

The substrate has to be optically transparent and may take any forms such as a disk, plate or sheet. Glass, quartz and synthetic resins are ordinarily used to make the substrate. The substrate may be surface treated with an alkylsilane such as trimethylchlorosilane so as to make a hydrophobic surface.

The present invention is more particularly described by way of examples.

Example 1

The photochromic spiropyran used in this example had the following chemical formula

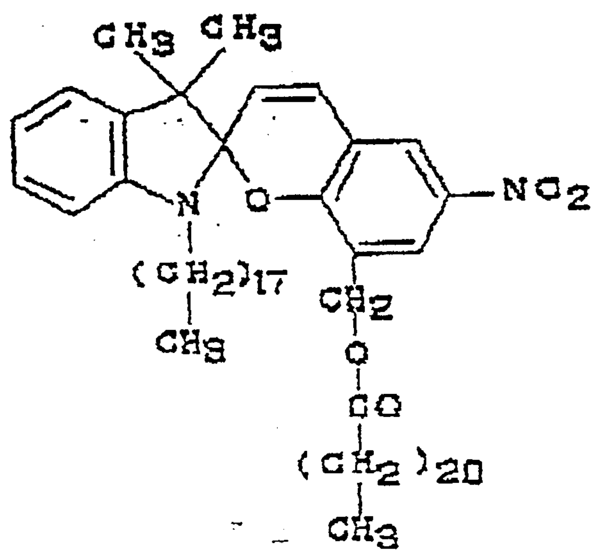

A glass substrate was treated with a 10% trimethylchlorosilane solution in toluene for 10 minutes. An LB film of a mixture of the spiropyran and stearic acid at a molar ratio of 1:3 was deposited on the glass substrate under the following conditions.

Subphase: a phosphate buffer having a pH of 7.0 and a temperature of 18° C.

Deposition pressure: 20 mN/m

Deposition rate: 10 mm/min.

The resulting recording medium is schematically illustrated in the accompanying drawing. In the figure, a recording medium M has a glass substrate 1 and a recording layer 2. The recording layer 2 has a plurality of, for example, monomolecular films 2a, 2b, 2c in which photochromic spiropyran molecules 3 and molecules 4 of stearic acid are mixed.

When the recording layer was irradiated with a laser beam having a wavelength of 350 nm, photomerocyanine was formed at portions where irradiated and had an absorption peak at 550 nm. When this medium was allowed to stand at normal temperature in the dark, it was found that the half life of the photomerocyanine was about 150 hours.

The above procedure was repeated for comparison without use of stearic acid, with the result that the half life was 10 hours. Thus, the recording medium of the invention had a significantly improved recording life.

Example 2

The general procedure of Example 1 was repeated except that 0.01 mmol/liter of cadmium chloride was added to the subphase and a mixture of the spiropyran used in Example 1 and cadmium stearate at a molar ratio of 1:3 was used, thereby obtaining a recording medium. The half life of the resulting photomerocyanine

was 100 hours, which was inferior to the case of Example 1 but was improved over the comparative medium in Example 1.

Example 3

A spiropyran of the following chemical formula was mixed with stearic acid at a mixing ratio by mole of 1:3, followed by repeating the procedure of Example 1 to obtain an optical recording medium.

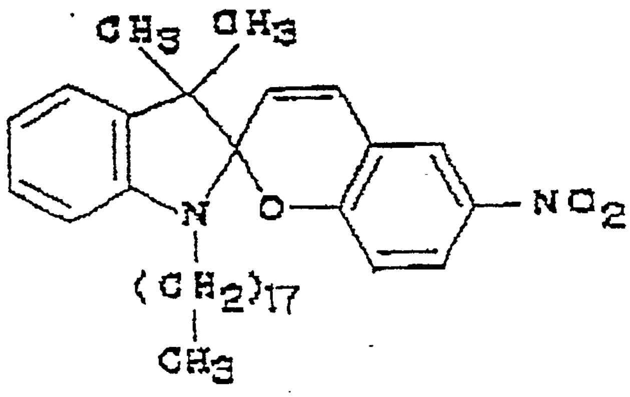

The half life was determined in the same manner as in Example 1, revealing that the life was 20 hours. The above procedure was repeated without use of the above spiropyran with the half life of the resulting photomerocyanine being 0.3 hours. Thus, the medium of the invention had a significantly improved half life of the photomerocyanine.

Example 4

A glass substrate treated in the same manner as in Example 1 was spin-coated with a solution of 10% of the spiropyran used in Example 3 and stearic acid at a molar ratio of 1:6 in toluene at a rate of 1500 r.p.m., thereby obtaining an optical recording medium. When the medium was irradiated with a laser beam having a wavelength of 350 nm, merocyanine having an absorption peak at 550 nm was formed at portions where irradiated. Thus, information was written. This medium was placed in the dark and allowed to stand at normal temperatures. The half life of the merocyanine was found to be 12 hours.

The above procedure was repeated without use of stearic acid, with a half life of 0.5 hours. Thus, the medium of the invention had a greatly improved life over the medium for comparison.

Example 5

A mixture of the spiropyran used in Example 3 and stearic acid at a molar ratio of 1:6 was further mixed with an acrylic resin at a concentration of 5 wt%. The resulting mixture was dissolved in toluene at a concentration of 10 wt%, followed by repeating the procedure to obtain a recording medium. The half life of the resulting merocyanine in the medium was found to be 25 hours.

The above procedure was repeated for comparison without use of stearic acid, with the result that the half life was 18 hours. Thus, the recording medium was improved over the comparative medium.

Example 6

The spiropyran used in Example 1 and stearic acid was mixed at a molar ratio of 1:6, which was further mixed with an acrylic resin at a concentration of 5 wt%. The resulting mixture was dissolved in toluene at a concentration of 10 wt%, followed by the procedure of Example 4 to obtain an optical recording medium.

The medium was subjected to a half life test, revealing that the half life was 45 hours. The half life was improved over the life in Example 5.

## Claims

**1.** An optical recording medium which comprises an optically transparent substrate and a recording layer

formed on said substrate, said recording layer comprising a photochromic Spiropyran having an alkyl group containing at least 10 carbon atoms in the molecule, **characterized in that** said recording layer comprises a mixture of said spiropyran and an amphiphatic compound selected from the group consisting of aliphatic acids having from 14 to 24 carbon atoms and salts thereof.

2. An optical recording medium according to claim 1, wherein said amphiphatic compound is used in an amount of 0.1 to 10 moles per mole of said photochromic spiropyran.

3. An optical recording medium according to claim 1, wherein said recording layer consists of a plurality of Langmuir-Blodgett films of said mixture.

4. An optical recording medium according to claim 1, wherein said spiropyran has the general formula

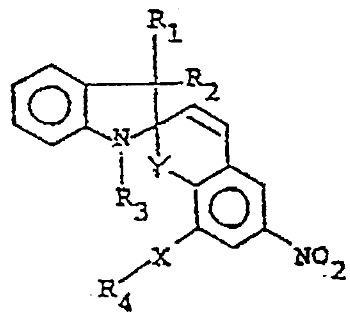

in which
$R_1$ and $R_2$ are independently a lower alkyl group,
$R_3$ represents an alkyl group having at least 10 carbon atoms,
X is a single bond or a group of one of the following formulae: $-C_nH_{2n}OCO-$, $-C_nH_{2n}COO-$, $-C_nH_{2n}NHCO-$, $-C_nH_{2n}CONH-$ or $-C_nH_{2n}O-$ wherein $n \geqq 0$,
$R_4$ represents an alkyl group having at least one carbon atom, and Y represents an oxygen or sulfur atom.

5. An optical recording medium according to claim 4, wherein $R_3$ is an alkyl group having from 14 to 24 carbon atoms and X is $-CH_2OCO-$ or -O-.

6. An optical recording medium according to claim 1, wherein said aliphatic acid is stearic acid.

7. An optical recording medium according to claim 1, wherein said amphiphatic compound is a metal salt of said aliphatic acid.

8. An optical recording medium according to claim 1, wherein said mixture further comprises a resin binder.

9. An optical recording medium according to claim 1, wherein said spiropyran is 6-nitro-1'-octadecyl-8-docosanoyloxy-3',3'-dimethylspiro[2H-1-benzopyran-2,2'-indoline] or 6-nitro-1'-octadecyl-8-methoxy-3',3'-dimethylspiro[2H-1-benzopyran-2,2'-indoline].

**Revendications**

1. Support d'enregistrement optique qui comprend un substrat optiquement transparent et une couche d'enregistrement formée sur ledit substrat, ladite couche d'enregistrement contenant un spiropyranne photochromique, ayant un groupe alkyle renfermant au moins 10 atomes de carbone dans la molécule, caractérisé en ce que ladite couche d'enregistrement contient un mélange dudit spiropyranne et d'un composé amphiphatique choisi dans le groupe constitué des acides aliphatiques ayant de 14 à 24 atomes de carbone et de leurs sels.

2. Support d'enregistrement optique selon la revendication 1, dans lequel ledit composé amphiphatique est utilisé en une proportion de 0,1 à 10 moles par mole dudit spiropyranne photochromique.

3. Support d'enregistrement optique selon la revendication 1, dans lequel ladite couche d'enregistrement consiste en plusieurs films de Langmuir-Blodgett dudit mélange.

4. Support d'enregistrement optique selon la revendication 1, dans lequel ledit spiropyranne répond à la formule générale :

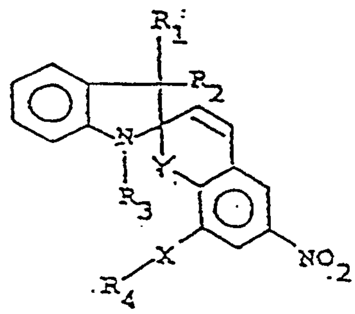

dans laquelle
$R_1$ et $R_2$ représentent, indépendamment l'un de l'autre, un groupe alkyle inférieur,
$R_3$ représente un groupe alkyle ayant au moins 10 atomes de carbone,
X représente une liaison simple ou un groupe répondant à l'une des formules $-C_nH_{2n}OCO-$, $-C_nH_{2n}COO-$, $-C_nH_{2n}NHCO-$, $-C_nH_{2n}$ CONH- et $-C_nH_{2n}O-$, dans lesquelles $n \geqq O$,
$R_4$ représente un groupe alkyle ayant au moins un atome de carbone et
Y représente un atome d'oxygène ou de soufre.

5. Support d'enregistrement optique selon la revendication 4, pour lequel $R_3$ est un groupe alkyle ayant de 14 à 24 atomes de carbone et X est $-CH_2OCO-$ ou - O-.

6. Support d'enregistrement optique selon la revendication 1, dans lequel ledit acide aliphatique est l'acide stéarique.

7. Support d'enregistrement optique selon la revendication 1, dans lequel ledit composé amphiphatique est un sel métallique dudit acide aliphatique.

8. Support d'enregistrement optique selon la revendication 1, dans lequel ledit mélange comprend en outre une résine jouant le rôle de liant.

9. Support d'enregistrement optique selon la revendication 1, dans lequel ledit spiropyranne est le 6-nitro-1'-octadécyl-8-docosanoyloxy-3', 3'-diméthylspiro (2H-1-benzopyranne-2, 2'-indoline) ou le 6-nitro-1'-octadécyl-8-méthoxy-3', 3'-diméthylspiro (2H-1-benzopyranne-2, 2'-indoline).

## Patentansprüche

1. Optisches Aufzeichnungsmaterial, das aus einem lichtdurchlässigen Substrat und einer auf dem Substrat gebildeten Aufzeichnungsschicht besteht, wobei die Aufzeichnungsschicht ein photochromes Spiropyran enthält, das in dem Molekül eine Alkylgruppe hat, die mindestens 10 Kohlenstoffatome enthält, **dadurch gekennzeichnet,** daß die Aufzeichnungsschicht aus einer Mischung aus dem Spiropyran und einer amphiphatischen Verbindung, die aus der aus aliphatischen Säuren mit 14 bis 24 Kohlenstoffatomen und Salzen davon bestehenden Gruppe ausgewählt ist, besteht.

2. Optisches Aufzeichnungsmaterial nach Anspruch 1, bei dem die amphiphatische Verbindung in einer Menge von 0,1 bis 10 mol je mol des photochromen Spiropyrans verwendet wird.

3. Optisches Aufzeichnungsmaterial nach Anspruch 1, bei dem die Aufzeichnungsschicht aus einer Vielzahl von Langmuir-Blodgett-Filmen aus der Mischung besteht.

4. Optisches Aufzeichnungsmaterial nach Anspruch 1, bei dem das Spiropyran die allgemeine Formel

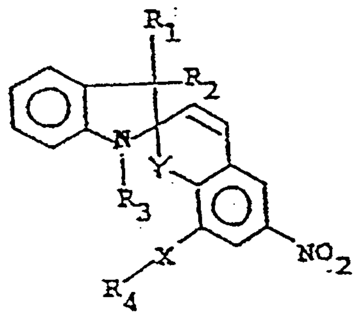

hat, worin
$R_1$ und $R_2$ unabhängig eine niedere Alkylgruppe bedeuten,
$R_3$ eine Alkylgruppe mit mindestens 10 Kohlenstoffatomen bedeutet,
X eine Einfachbindung oder eine Gruppe mit einer der folgenden Formeln: $-C_nH_{2n}OCO-$, $-C_nH_{2n}COO-$, $-C_nH_{2n}NHCO-$, $-C_nH_{2n}CONH-$ oder $-C_nH_{2n}O-$, worin $n \geqq 0$ bedeutet,
$R_4$ eine Alkylgruppe mit mindestens einem Kohlenstoffatom bedeutet und
Y ein Sauerstoff- oder Schwefelatom bedeutet.

**5.** Optisches Aufzeichnungsmaterial nach Anspruch 4, bei dem $R_3$ eine Alkylgruppe mit 14 bis 24 Kohlenstoffatomen bedeutet und X $-CH_2OCO-$ oder -O- bedeutet.

**6.** Optisches Aufzeichnungsmaterial nach Anspruch 1, bei dem die aliphatische Säure Stearinsäure ist.

**7.** Optisches Aufzeichnungsmaterial nach Anspruch 1, bei dem die amphiphatische Verbindung ein Metallsalz der aliphatischen Säure ist.

**8.** Optisches Aufzeichnungsmaterial nach Anspruch 1, bei dem die Mischung ferner ein Harzbindemittel enthält.

**9.** Optisches Aufzeichnungsmaterial nach Anspruch 1, bei dem das Spiropyran 6-Nitro-1'-octadecyl-8-docosanoyloxy-3',3'-dimethyl-spiro[2H-1-benzopyran-2,2'-indolin] oder 6-Nitro-1'-octadecyl-8-methoxy-3',3'-dimethyl-spiro[2H-1-benzopyran-2,2'-indolin] ist.

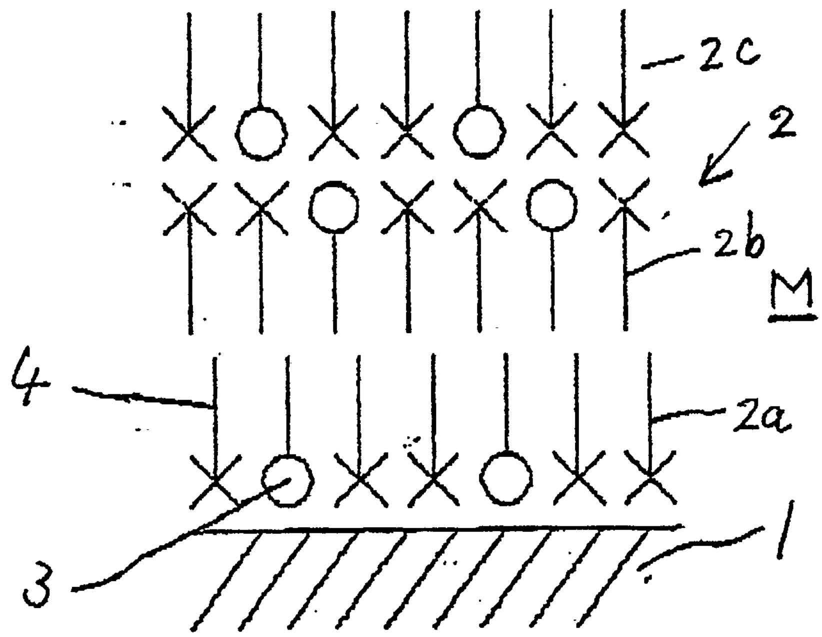
2c
2
2b
M
4
2a
3
1